# EUROPEAN PATENT SPECIFICATION

(11) **EP 2 151 965 B1**
(45) Date of publication and mention of the grant of the patent: **17.01.2018**
(21) Application number: 08104987.6
(22) Date of filing: 07.08.2008
(51) Int. Cl.: H04M 11/06, H04B 3/32, H04L 25/03

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 10.02.2010
(73) Proprietor: ADTRAN GmbH, 10557 Berlin (DE)
(72) Inventor: Haustein, Thomas, Dr., 81735 München (DE); Kozek, Werner, Dr., 1220 Wien (AT); Mück, Josef, 81675 München (DE)
(74) Representative: Brachmann, Roland W.

(56) References cited:
- WO-A-2004/006492
- DE-A1-102006 051 435
- US-A1- 2006 270 360

## Description

The invention relates to a method and to a device for data processing and to a communication system comprising such a device.

DE 10 2006 051 435 A1 refers to a solution for conveying data across several channels which may be distributed among a bundled cable.

US 2006/0270360 A1 is directed to an apparatus and a method for transmitting/receiving data in a mobile communication system using multiple antennas.

WO 2004/006492 A1 discloses a power control of a digital subscriber line.

In fixed wired high speed data connection (DSL - digital subscriber line) new standards like, e.g., VDSL2 are emerging meeting an increasing load and more demand for bandwidth preferably at low cost. This is often realized by using higher order modulation in order to increase a spectral efficiency in a limited frequency spectrum.

A similar situation may be applicable in a fixed wireless connection as suggested by WIMAX. Hence, reference can be made to all kinds of fixed point to multi-point connections, wherein the term "fixed" in particular refers to stationary or quasi-stationary positioning of a base station or of a central office (CO) and user terminals (UTs).

In current DSL systems, a multi-user configuration comprises several active users that are connected to the CO over wires (copper pairs).

Furthermore, DSL is operated in a circuit switch mode for all active lines. Hence, data is transmitted at all times which will cause constant interference to other connections that are deployed with the same cable bundle. If no user data is transmitted, idle data is transmitted in uplink and downlink directions.

The **problem** to be solved is to further improve a signal to interference plus noise ratio (SINR) in an existing point to multipoint environment.

This problem is solved according to the features of the independent claims. Further embodiments result from the depending claims.

In order to overcome this problem, a method for data processing is suggested comprising the steps:
- determine at least one inactive line;
- utilize the at least one inactive line for joint signal processing and/or for joint signal pre-processing.

Hence, joint signal processing as well as joint signal pre-processing allows reducing crosstalk effects and hence improving an overall SINR.

In an embodiment, said data processing is provided in a point to multipoint environment, in particular in a digital subscriber line environment.

In another embodiment, the at least one inactive line is detected by a central unit upon notification by a user terminal.

Such notification may comprise a message from said user terminal. The central unit may be a central office and/or a DSLAM. The user terminal may be located and/or associated with a CPE.

In a further embodiment, the at least one inactive line is utilized for signal processing in uplink direction.

In a next embodiment, the at least one inactive line is utilized for signal pre-processing in downlink direction.

It is also an embodiment that the at least one inactive line is utilized by actively conveying signals in order to reduce a crosstalk and/or interference.

Pursuant to another embodiment, the inactive line is a connection between a CO and a CPE with no user data and/or idle signals exchanged between said CPE and the CO.

According to an embodiment, the inactive line is released for normal operation upon detection of a pre-defined signal, in particular a training signal.

Hence, in case a training signal is detected from the CPE, the CO may release the inactive line (e.g., switch its status to active) and may not actively use it for further joint signal-(pre-)processing.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer.

The problem stated supra is further solved by a communication system comprising the device as described herein.

Embodiments of the invention are shown and illustrated in the following figure:

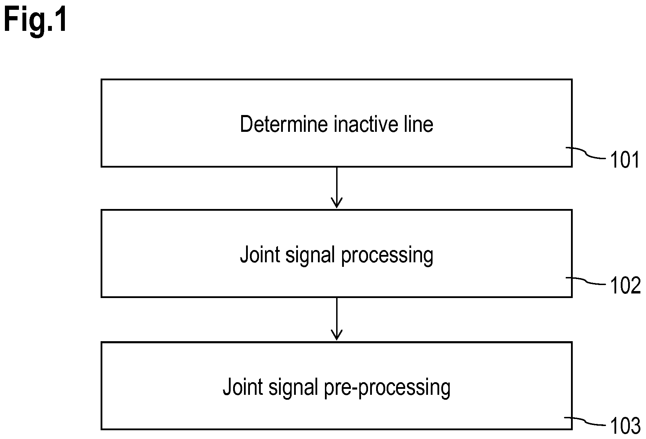

- Fig.1: shows steps of a method to provide an efficient data communication in a point to multipoint environment.

For the purpose of illustration and as an example of a point to multipoint environment, reference is made to a fixed line connection as utilized by DSL systems.

In such a DSL system, a central office (CO) is connected with several customer premises equipments (CPEs) via at least one (or several) cables. Within such cable, crosstalk and/or interference may deteriorate the data conveyed between the CO and the CPEs.

When considering an uplink direction or a downlink direction from the CPE to the CO, a joint signal processing may be performed at the CO.

The approach provided herewith suggests using at least one inactive line, i.e., at least one line or link between a port of the CO and an CPE that is not active, for extended signal processing purposes in a multi-port (multiple-input-multiple-output, MIMO) scenario.

With regard to an uplink direction from the CPE towards the CO, at least one additional port (connected to the inactive line) at the CO may be utilized for detecting crosstalk from the active lines.

In downlink direction from the CO to the (several) CPEs, the additional port (connected to the inactive line) can be used for linear and/or for non-linear pre-coding purposes towards the active users.

The CO performs joint detection and/or joint transmission techniques in order to improve the link quality of the active lines.

An inactive line could be a line between the CO and a CPE with no data or idle signals transmitted, e.g., a line during a switch-off time of the CPE.

In such case, the CPE may provide a short message during power-off to the CO indicating that the line will become inactive (from now on) and can thus be used for the joint signal processing. This advantageously avoids that joint processing starts based on a temporary noise (burst error) or the like which may occur on an otherwise active line.

A line that is used for joint signal processing can be released to normal operation when the CPE is switched on (again) and the CO detects a training signal coming from the CPE.

In UPLINK direction, the CO may perform joint signal processing using linear or non-linear MIMO detection techniques via its active ports plus any ports (or a selection thereof) connected to inactive users. The additional degrees of freedom of the additional ports conveying no user data or idle data can be efficiently utilized for a better interference suppression between the active communication lines.

In DOWNLINK direction, the CO may perform a joint signal pre-processing using linear or non-linear MIMO pre-coding techniques via its active ports plus any ports connected to inactive users. The additional degrees of freedom of the additional ports at the transmit side can be used for an improved suppression of inter-line crosstalk between the other communication pairs due to an additional transmit diversity.

It is an advantage that in pre-coded downlink direction a high transmission power can be used to achieve interference cancellation at the transmit side. This is applicable as there is no user data transmitted over the inactive line. Hence, the at least one inactive line may allow for a simplified linear pre-coding technique to provide an efficient interference cancellation.

A pre-compensation of inter-stream interference may result in a substantial SINR improvement for individual links in downlink direction.

The solution suggested is in particular compatible with existing CPEs. Regarding joint signal processing in uplink direction, information required is available at the CO side. Hence, no changes of the CPE hardware and/or firmware are required. For joint signal pre-processing in downlink direction, no changes of the CPE hardware is needed. However, in order to provide a feedback channel from the CPE to the CO to be utilized for an improved performance, a firmware upgrade of the CPE may be beneficial.

**Fig.1** shows steps of a method to provide an efficient data communication in a point to multipoint environment. In a step 101, the CO determines at least one inactive line. Such inactive line may be detected upon receiving a corresponding notification or message indicating that the remote CPE enters an offline state or is actually being switched off.

In a step 102, the CO provides joint signal processing considering incoming traffic on several ports, wherein at least one of such ports is connected to an inactive line (or via such line to an inactive CPE). Knowing which ports are connected to inactive lines, the CO can actively process incoming traffic and hence reduce an interference and/or crosstalk of the traffic conveyed via the still active connections (i.e. connections to still active CPEs).

In a step 103, the CO performs a joint signal pre-processing by modifying signals to be conveyed over the lines (including the line(s) connected to inactive CPE(s)) in a way that interference and/or crosstalk is reduced.

Hence, joint signal processing as well as joint signal pre-processing allows to significantly reduce crosstalk effects and hence improves the overall SINR.

### List of Abbreviations:

- CO: Central Office
- CPE: Customer Premises Equipment
- DSL: Digital Subscriber Line
- DSLAM: Digital Subscriber Line Access Multiplexer
- SINR: Signal to Interference plus Noise Ratio
- UT: User Terminal

## Claims

1. A method for signal processing in a digital subscriber line system, wherein a central office is connected to multiple customer premises equipments via multiple lines, comprising the steps of:
- determining via a feedback channel from the user premises equipment to the central office at least one line where no user data and no idle signals are transmitted; and
- utilizing the at least one line determined for, in uplink direction from the user premises equipments to the central office, detecting crosstalk from the further lines and/or for, in downlink direction from the central office to the customer premises equipments, interference cancellation.

2. The method according to claim 1, wherein said data processing is provided in a point to multipoint environment.

3. The method according to any of the preceding claims,
wherein the at least one line determined is detected by the central office upon notification by a customer premises equipment.

4. The method according to any of the preceding claims,
wherein the at least one line determined is utilized by actively conveying signals in order to reduce a crosstalk and/or interference.

5. The method according to any of the preceding claims,
wherein the at least one line determined is released for normal operation upon detection of a pre-defined signal.

6. The method according to claim 5, wherein the predefined signal is a training signal.

7. A communication system arranged such that the method according to any of the preceding claims is executable.

8. A device for signal processing in a digital subscriber line system, the device being connectable to multiple customer premises equipments via multiple lines, comprising means for:
- determining via a feedback channel from the user premises equipment to the device at least one line where no user data and no idle signals are transmitted; and
- utilizing the at least one line determined for, in uplink direction from the user premises equipments to the device, detecting crosstalk from the further lines and/or for, in downlink direction from the device to the customer premises equipments, pre-coding.

9. The device according to claim 8, wherein the device is a digital subscriber line access multiplexer.

10. A device for signal processing in a digital subscriber line system comprising means for notifying a central office according to claims 8 or 9 of at least one line where no user data and no idle signals are transmitted to enable the central office to perform the method according to any of claims 1 to 6.

11. A device according to claim 10, wherein the device is a customer premises equipment.

## Patentansprüche

1. Verfahren zur Signalverarbeitung in einem digitalen Teilnehmeranschlusssystem, wobei eine Zentrale über mehrere Leitungen mit mehreren Teilnehmernetzgeräten verbunden ist, welches folgende Schritte umfasst:
- Bestimmen, über einen Feedback-Kanal von dem Teilnehmernetzgerät zu der Zentrale, mindestens einer Leitung, auf welcher keine Benutzerdaten und keine Ruhesignale übertragen werden; und
- Nutzen der mindestens einen bestimmten Leitung, in der Uplink-Richtung von den Teilnehmernetzgeräten zu der Zentrale, zum Erkennen von Nebensprechen von den weiteren Leitungen und/oder, in der Downlink-Richtung von der Zentrale zu den Teilnehmernetzgeräten, zur Interferenzunterdrückung.

2. Verfahren nach Anspruch 1, wobei die Datenverarbeitung in einer Punkt-zu-Mehrpunkt-Umgebung bereitgestellt wird.

3. Verfahren nach einem der vorhergehenden Ansprüche, wobei die mindestens eine bestimmte Leitung bei Benachrichtigung durch ein Teilnehmernetzgerät durch die Zentrale erkannt wird.

4. Verfahren nach einem der vorhergehenden Ansprüche, wobei die mindestens eine bestimmte Leitung durch das aktive Übermitteln von Signalen zur Reduzierung eines Nebensprechens und/oder einer Interferenz genutzt wird.

5. Verfahren nach einem der vorhergehenden Ansprüche, wobei die mindestens eine bestimmte Leitung bei Erkennung eines vordefinierten Signals für den Normalbetrieb freigegeben wird.

6. Verfahren nach Anspruch 5, wobei das vordefinierte Signal ein Trainingssignal ist.

7. Kommunikationssystem, welches derart angeordnet ist, dass das Verfahren nach einem der vorhergehenden Ansprüche ausführbar ist.

8. Vorrichtung zur Signalverarbeitung in einem digitalen Teilnehmeranschlusssystem, wobei die Vorrichtung über mehrere Leitungen mit mehreren Teilnehmernetzgeräten verbunden werden kann, welche Mittel für Folgendes umfasst:
- Bestimmen, über einen Feedback-Kanal von dem Teilnehmernetzgerät zu der Vorrichtung, mindestens einer Leitung, auf welcher keine Benutzerdaten und keine Ruhesignale übertragen werden; und
- Nutzen der mindestens einen bestimmten Leitung, in der Uplink-Richtung von den Teilnehmernetzgeräten zu der Vorrichtung, zum Erkennen von Nebensprechen von den weiteren Leitungen und/oder, in der Downlink-Richtung von der Vorrichtung zu den Teilnehmernetzgeräten, zur Vorcodierung.

9. Vorrichtung nach Anspruch 8, wobei die Vorrichtung ein digitaler Teilnehmeranschluss-Zugangsmultiplexer ist.

10. Vorrichtung zur Signalverarbeitung in einem digitalen Teilnehmeranschlusssystem nach Anspruch 8 oder 9, die Mittel zum Benachrichtigen einer Zentrale über mindestens eine Leitung, auf welcher keine Benutzerdaten und keine Ruhesignale übertragen werden, umfasst, um der Zentrale das Durchführen des Verfahrens nach einem der Ansprüche 1 bis 6 zu ermöglichen.

11. Vorrichtung nach Anspruch 10, wobei die Vorrichtung ein Teilnehmernetzgerät ist.

## Revendications

1. Procédé de traitement de signal dans un système de ligne d'abonné numérique, dans lequel un bureau central est connecté à de multiples équipements installés dans les locaux d'un client par l'intermédiaire de plusieurs lignes, comprenant les étapes suivantes :
- détermination par l'intermédiaire d'un canal de retour de l'équipement des locaux de l'utilisateur vers le bureau central d'au moins une ligne où aucune donnée d'utilisateur et aucun signal de repos ne sont transmis ; et
- l'utilisation de la ligne ou des lignes déterminées pour, dans la direction de liaison montante des équipements des locaux de l'utilisateur au bureau central, détecter la diaphonie parmi les lignes supplémentaires et/ou pour, dans la direction de liaison descendante du bureau central vers les équipements des locaux de l'utilisateur, effectuer une suppression des interférences.

2. Procédé selon la revendication 1, dans lequel ledit traitement de données est fourni dans un environnement de connexion d'un point simple à des points multiples.

3. Procédé selon l'une quelconque des revendications précédentes, dans lequel la ligne ou les lignes déterminées sont détectées par le bureau central lors de la notification par un équipement installé dans les locaux d'un client.

4. Procédé selon l'une quelconque des revendications précédentes, dans lequel la ligne ou les lignes déterminées sont utilisées pour transporter activement des signaux afin de réduire une diaphonie et/ou des interférences.

5. Procédé selon l'une quelconque des revendications précédentes, dans lequel la ligne ou les lignes déterminées sont libérées en vue d'un fonctionnement normal lors de la détection d'un signal prédéfini.

6. Procédé selon la revendication 5, dans lequel le signal prédéfini est un signal d'apprentissage.

7. Système de communication agencé de sorte que le procédé selon l'une quelconque des revendications précédentes soit exécutable.

8. Dispositif de traitement de signal dans un système de ligne d'abonné numérique, le dispositif pouvant être connecté à de multiples équipements installés dans les locaux d'un client par plusieurs lignes, comprenant des moyens pour :
- la détermination par l'intermédiaire d'un canal de retour de l'équipement des locaux de l'utilisateur vers le dispositif d'au moins une ligne où aucune donnée d'utilisateur et aucun signal de repos ne sont transmis ; et
- l'utilisation de la ligne ou des lignes déterminées pour, dans la direction de liaison montante des équipements des locaux de l'utilisateur au dispositif, détecter une diaphonie parmi les lignes supplémentaires et/ou pour, dans la direction de liaison descendante du dispositif vers les équipements installé dans les locaux d'un client, effectuer un précodage.

9. Dispositif selon la revendication 8, dans lequel le dispositif est un multiplexeur d'accès à une ligne d'abonné numérique.

10. Dispositif de traitement de signal dans un système de ligne d'abonné numérique comprenant des moyens pour notifier à un bureau central selon les revendications 8 ou 9 l'existence d'au moins une ligne où aucune donnée d'utilisateur et aucun signal de repos ne sont transmis pour permettre au bureau central d'exécuter le procédé selon l'une quelconque des revendications 1 à 6.

11. Dispositif selon la revendication 10, dans lequel le dispositif est un équipement installé dans les locaux d'un client.
